# EUROPÄISCHE PATENTSCHRIFT

(11) **EP 2 964 475 B1**
(45) Veröffentlichungstag und Bekanntmachung des Hinweises auf die Patenterteilung: **25.07.2018**
(21) Anmeldenummer: 14705044.7
(22) Anmeldetag: 15.02.2014
(51) Int. Cl.: B62D 21/11, B60G 7/00, F16C 7/02

(54) **ACHSLENKER FÜR EIN KRAFTFAHRZEUG**
SUSPENSION LINK FOR A MOTOR VEHICLE
BRAS DE SUSPENSION POUR UN VÉHICULE

(30) Priorität: 08.03.2013 DE 102013004010
(43) Veröffentlichungstag der Anmeldung: 13.01.2016
(73) Patentinhaber: Audi AG, 85045 Ingolstadt (DE)
(72) Erfinder: SCHINDLER, Sebastian, 85049 Ingolstadt (DE); FESSEL, Guido, 85049 Ingolstadt (DE)
(74) Vertreter: Reichert, Thomas Klaus
(86) Internationale Anmeldenummer: PCT/EP2014/000420
(87) Internationale Veröffentlichungsnummer: WO 2014/135251

(56) Entgegenhaltungen:
- EP-A2- 0 900 675
- WO-A1-2011/141538
- DE-A1- 2 845 345
- DE-A1- 3 915 991
- DE-A1- 10 153 799
- DE-B4-102006 058 377
- DE-C1- 3 827 854
- JP-A- H01 171 931
- JP-A- H11 270 607
- JP-A- H11 270 608

## Beschreibung

Die Erfindung betrifft einen Achslenker für ein Kraftfahrzeug gemäß der im Oberbegriff des Patentanspruches 1 angegebenen Art.

Die DE 38 27 854 C1 zeigt eine Radführung für Kraftfahrzeuge mit einer Spurstange oder einem Querlenker in Rohrform, mit einem in das Rohr eingesetzten Übertragungsstab zur Übertragung von Zugkräften, der einerends von einer kraft- oder formschlüssigen Halterung in dem Rohr gehalten ist und anderenends aus dem Rohrende herausragt. Ein Übertragungsstab zwischen Halterung und Rohrende hat eine Sollbruchstelle und zwischen der Sollbruchstelle und dem Rohrende einen Absatz, wobei das Rohr zwischen Absatz und Rohrende mit einer Rohrverengung versehen ist, die einen Anschlag für den Absatz beim Reißen der Sollbruchstelle bildet, um eine völlige Bauteiltrennung zu verhindern. Bei einer Radführung wird die Zugkraft von der Spurstange bzw. von dem Querlenker über den Übertragungsstab weitergeleitet. Bei einer eine bestimmte Grenzlast überschreitenden Zugkraft reißt die Sollbruchstelle ab. Dann bewegt sich der Übertragungsstab unter einer fortwährenden Zugbelastung mit seinem Absatz bis zu der Rohrverengung, wodurch die Zugkraft zwischen Übertragungsstab und Rohr weiter übertragen werden kann. Die Längenänderung der Einrichtung führt jedoch zu einer solch ausgeprägten Geometrieveränderung der Radführung, dass jeder Fahrer durch das Fahrverhalten des Kraftfahrzeuges eindeutig vorgewarnt wird.

Die DE 10 2006 058 377 B4 betrifft eine Samerstange zur strukturellen Verstärkung einer Rumpfstruktur eines Flugzeugs mit einem Schaft und beidseitig an Schaftenden angeordneten Augen zur Anbindung der Samerstange an die Rumpfstruktur. Reine Crashlasten werden in Crashnetzen sehr gewichtsgünstig mit Kunststoffseilen abgefangen. Da die Augen mittels einer Verstärkungsanordnung verbunden sind, die mit einer Vielzahl von Verstärkungsfasern gebildet ist, weist die Samerstange in allen Flugzuständen einschließlich der Unfallsituation (Crashfall) eine hinreichende mechanische Belastbarkeit auf. Die Verstärkungsanordnung kann als eine Ummantelung ausgebildet sein, die einen Schaft und eine Gewindestange mit den daran angeordneten Augen im Wesentlichen vollständig umschließt.

Ein gattungsgemäßer, sämtliche Merkmale des Oberbegriffs des Patentanspruches 1 aufweisender Achslenker für ein Kraftfahrzeug ist in der DE 101 53 799 A1 offenbart.

Es ist Aufgabe der Erfindung einen Achslenker mit Energieabsorption und einem anzeigenden Schadensmechanismus in Zug und Druck bereit zu stellen, wobei mit dem durch das duktile Material verbundenen Achslenker eine ausreichende Restlebensdauer zu gewährleisten ist, die einem Benutzer den Besuch einer Werkstatt ermöglicht.

Dazu ist der erfindungsgemäße Achslenker dadurch gekennzeichnet, dass die Verstärkungs-Ummantelung an einer Längsposition zwischen den Verbindungselementen eine Sollbruchstelle aufweist, und dass der Umfang des Metallstabs von der Verankerung bei dem einen Verbindungselement zu der Sollbruchstelle zunimmt und von der Sollbruchstelle zu dem anderen Verbindungselement abnimmt.

Der Achslenker besteht somit aus einem duktilen Metallstab als Kern und einer Verstärkungs-Ummantelung aus sprödem Material, die für die nötige Steifigkeit und Festigkeit im normalen Betrieb sorgt. Der Metallstab ist so ausgelegt, dass dieser bei einem Versagen der äußeren Verstärkungs-Ummantelung infolge eines Missbrauchsereignisses plastisch wird und dabei langsam aus dem Lenker gezogen wird. Infolgedessen kann der Achslenker knicken (Druck) oder seine Länge ändern (Zug), was für den Benutzer anzeigend ist, beispielsweise durch ein schief stehendes Lenkrad, ohne dass es zu einer Separation der Bruchstücke kommt.

Bei dem erfindungsgemäßen Achslenker kann die Kraft, die zum Auseinanderziehen des Metallstabes relativ zu der Verstärkungs-Ummantelung erforderlich ist, auf einfache Weise über den Werkstoff des Metallstabes und die geometrische Dimensionierung des Metallstabes eingestellt werden. Ferner ist vorteilhaft, dass die plastische Verformung des Achslenkers einen Energieabbau zur Folge hat.

Da bei dem erfindungsgemäßen Achsenlenker der Umfang des Metallstabs von der Verankerung bei dem einen Verbindungselement zu der Sollbruchstelle zunimmt und von der Sollbruchstelle zu dem anderen Verbindungselement abnimmt, lässt sich in vorteilhafter Weise die Kraft zum Auseinanderziehen des Achslenkers bzw. die Duktilität des Metallstabes einstellen.
Eine vorteilhafte Ausgestaltung des erfindungsgemäßen Achslenkers ist dadurch gekennzeichnet, dass die Verstärkungs-Ummantelung aus Faserverstärktem Kunststoff, vorzugsweise aus carbonfaserverstärktem Kunststoff (CFK), besteht.
Eine weitere vorteilhafte Ausgestaltung des erfindungsgemäßen Achslenkers ist dadurch gekennzeichnet, dass die Kraft, die zum Auseinanderziehen des Metallstabes relativ zu der Verstärkungs-Ummantelung durch die Reibpaarung der Materialien des Metallstabes und der Verstärkungs-Ummantelung einzustellen ist, wobei insbesondere die Kraft zwischen einer großen Kraft, die durch raue Oberflächen an dem Metallstab und/oder der Verstärkungs-Ummantelung hervorgerufen wird, und einer geringeren Kraft, die durch polierte Oberflächen an dem Metallstab und/oder der Verstärkungs-Ummantelung hervorgerufen wird, und einer minimalen Kraft, die durch Anwendung von Öl an den Oberflächen an dem Metallstab und/oder der Verstärkungs-Ummantelung hervorgerufen wird, einstellbar ist. Mit anderen Worten kann die betreffende Kraft in einem großen Bereich eingestellt werden je nach dem speziellen Anwendungsfall.

Eine weitere vorteilhafte Ausgestaltung des erfindungsgemäßen Achslenkers ist dadurch gekennzeichnet, dass die Verankerungen des Metallstabes durch angeformte Verdickungen des Metallstabes gebildet sind, wobei das komplette Herausrutschen des Metallstabes aus der Verstärkungs-Ummantelung auf einfache Weise durch einen Formschluss verhindert wird.

Eine weitere vorteilhafte Ausgestaltung des erfindungsgemäßen Achslenkers ist dadurch gekennzeichnet, dass der Metallstab als Hohlkörper ausgebildet ist, der so dimensioniert ist, dass er bei Bruch-Beanspruchung in sich zusammenfällt und damit die Verbindung zu der Verstärkungs-Ummantelung verliert, wobei die Reibung zwischen dem Metallstab und der Verstärkungs-Ummantelung wegfällt, so dass sich die beiden Bauteile leicht auseinander ziehen lassen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

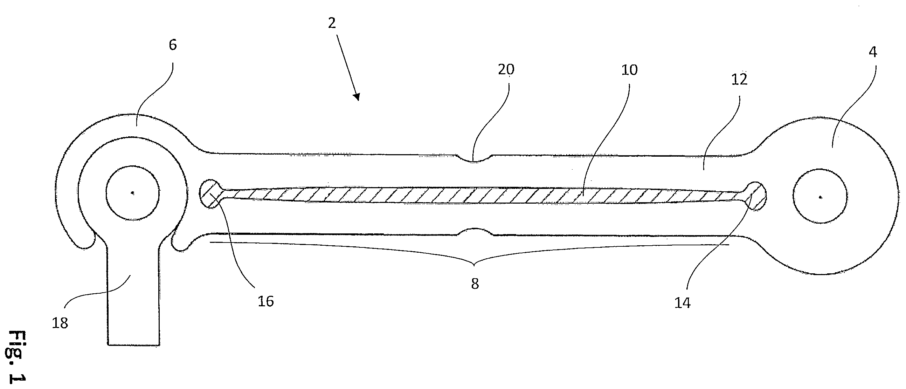

- Fig. 1: einen Schnitt durch eine Ausführungsform des erfindungsgemäßen Achslenkers.

Gemäß Fig. 1 weist der erfindungsgemäße Achslenker 2 ein aufbauseitiges Verbindungselement 4 und ein radseitiges Verbindungselement 6 auf, und die beiden Verbindungselemente 4, 6 sind durch ein Stabelement 8 aus einem Metallstab 10 und einer Verstärkungs-Ummantelung 12 miteinander verbunden. Der Metallstab 10 besteht aus einem duktilen Material und ist in der Nähe der Verbindungselemente 4, 6 in der Verstärkungs-Ummantelung 12 durch angeformte Verdickungen des Metallstabes 10 verankert.

Die Verstärkungs-Ummantelung 12 dient dazu, die nötige Steifigkeit und Festigkeit des Achslenkers 2 in normalem Betrieb sicherzustellen. Dazu besteht die Verstärkungs-Ummantelung 12 aus einem spröden Material, insbesondere aus carbonfaserverstärktem Kunststoff (CFK-Ummantelung). Die Verstärkungs-Ummantelung 12 hat schließlich eine Sollbruchstelle 20 an der der erfindungsgemäße Achslenker 2 bei einer Überbelastung bricht.

Bei dem gezeigten Ausführungsbeispiel des Achslenkers 2 nimmt der Umfang des Metallstabes 10 von der Verankerung bzw. Verdickung 14 bei dem Verbindungselement 4 zu der Sollbruchstelle 20 hin zu, und von der Sollbruchstelle 20 zu dem radseitigen Verbindungselement 6 ab.

Die Kraft, die zum Auseinanderziehen des Metallstabes 10 relativ zu der Verstärkungs-Ummantelung 12 erforderlich ist, kann auf verschiedene Weise, insbesondere durch die Reibpaarung der Materialien des Metallstabes 10 und der Verstärkungs-Ummantelung 12 eingestellt werden. Die Kraft kann zu diesem Zweck zwischen einer großen Kraft, die durch raue Oberflächen an Metallstab 10 und/oder der Verstärkungs-Ummantelung 12 hervorgerufen wird, und einer geringeren Kraft, die durch polierte Oberflächen an dem Metallstab 10 und/oder der Verstärkungs-Ummantelung 12 hervorgerufen wird, und einer minimalen Kraft, die durch Anwendung von Öl an den Oberflächen an den Metallstab 10 und/oder der Verstärkungs-Ummantelung 12 hervorgerufen wird, eingestellt werden.

Ebenfalls unter dem Gesichtspunkt der Einstellung der Kraft beim Auseinanderziehen der Bauteile kann der Metallstab 10 als Hohlkörper (nicht gezeigt) ausgebildet sein, der bei Bruch-Beanspruchung in sich zusammenfällt und damit die Verbindung zu der Verstärkungs-Ummantelung 12 verliert.

### Bezugszeichenliste

- 2: Achslenker
- 4: Aufbauseitiges Verbindungselement
- 6: Radseitiges Verbindungselement
- 8: Stabelement
- 10: Metallstab
- 12: Verstärkungs-Ummantelung
- 14: Verdickung
- 16: Verdickung
- 18: Lenker
- 20: Sollbruchstelle

## Patentansprüche

1. Achslenker (2) für ein Kraftfahrzeug, der ein aufbauseitiges Verbindungselement (4) und ein radseitiges Verbindungselement (6) aufweist, wobei die Verbindungselemente durch ein Stabelement (8) aus einem Metallstab (10) und einer Verstärkungs-Ummantelung (12) miteinander verbunden sind, wobei, der Metallstab (10) aus duktilem Material besteht und bei den Verbindungselementen in der Verstärkungs-Ummantelung (12) verankert ist, und wobei die Verstärkungs-Ummantelung (12) aus einem spröden Material besteht, **dadurch gekennzeichnet, dass** die Verstärkungs-Ummantelung (12)an einer Längsposition zwischen den Verbindungselementen eine Sollbruchstelle (20) aufweist und dass der Umfang des Metallstabs (10) von der Verankerung bei dem einen Verbindungselement zu der Sollbruchstelle (20) zunimmt und von der Sollbruchstelle (20) zu dem anderen Verbindungselement abnimmt.

2. Achslenker (2) nach Anspruch 1, **dadurch gekennzeichnet, dass** die Verstärkungs-Ummantelung (12) aus faserverstärktem Kunststoff besteht.

3. Achslenker (2) nach Anspruch 1, **dadurch gekennzeichnet, dass** die Verstärkungs-Ummantelung (12) aus carbonfaserverstärktem Kunststoff (CFK) besteht.

4. Achslenker (2) nach einem der Ansprüche 1 bis 3, **dadurch gekennzeichnet, dass** die Kraft, die zum Auseinanderziehen des Metallstabes (10) relativ zu der Verstärkungs-Ummantelung (12) durch die Reibpaarung der Materialien des Metallstabes (10) und der Verstärkungs-Ummantelung (12) eingestellt ist.

5. Achslenker (2) nach Anspruch 4, **dadurch gekennzeichnet, dass** die Kraft zwischen einer großen Kraft, die durch raue Oberflächen an dem Metall stab (10) und/oder der Verstärkungs-Ummantelung (12) hervorgerufen wird, und einer geringeren Kraft, die durch polierte Oberflächen an dem Metallstab (10) und/oder der Verstärkungs-Ummantelung (12) hervorgerufen wird, und einer minimalen Kraft, die durch Anwendung von Öl an den Oberflächen an dem Metallstab (10) und/oder der Verstärkungs-Ummantelung (12) hervorgerufen wird, einstellbar ist.

6. Achslenker (2) nach Anspruch 1, **dadurch gekennzeichnet, dass** die Verankerungen des Metallstabs (10) durch angeformte Verdickungen (14, 16) des Metallstabs (10) gebildet sind.

7. Achslenker (2) nach Anspruch 1, **dadurch gekennzeichnet, dass** der Metallstab (10) als Hohlkörper ausgebildet ist, der so dimensioniert ist, dass er bei Bruch-Beanspruchung in sich zusammenfällt und damit die Verbindung zu der Verstärkungs-Ummantelung (12) verliert.

## Claims

1. Suspension link (2) for a motor vehicle, which has a connecting element (4) on the body side and a connecting element (6) on the wheel side, wherein the connecting elements are connected with one another by means of a rod element (8) made of a metal rod (10) and a reinforcing sheath (12), wherein the metal rod (10) is made of ductile material and is anchored at the connecting elements in the reinforcing sheath (12), and wherein the reinforcing sheath (12) is made of a brittle material, **characterised in that** the reinforcing sheath (12) has at a longitudinal position between the connecting elements a predetermined breaking point (20) and that the circumference of the metal rod (10) increases from the anchorage at the one connecting element to the predetermined breaking point (20) and decreases from the predetermined breaking points (20) to the other connecting element.

2. Suspension link (2) according to claim 1, **characterised in that** the reinforcing sheath (12) is made of fibre-reinforced plastic.

3. Suspension link (2) according to claim 1, **characterised in that** the reinforcing sheath (12) is made of carbon fibre-reinforced plastic (CFK).

4. Suspension link (2) according to one of claims 1 to 3, **characterised in that** the force, which for pulling apart the metal rod (10) relatively to the reinforcing sheath (12) is set by the friction pairing of the materials of the metal rod (10) and the reinforcing sheath (12).

5. Suspension link (2) according to claim 4, **characterised in that** the force can be adjusted between a large force, which is generated by raw surfaces on the metal rod (10) and/or on the reinforcing sheath (12), and a lesser force, which is generated by polished surfaces on the metal rod (10) and/or on the reinforcing sheath (12), and a minimal force, which is generated by using oil on the surfaces on the metal rod (10) and/or on the reinforcing sheath (12).

6. Suspension link (2) according to claim 1, **characterised in that** the anchor points of the metal rod (10) are formed by integrally formed thickenings (14, 16) of the metal rod (10).

7. Suspension link (2) according to claim 1, **characterised in that** the metal rod (10) is formed as a hollow body which is proportioned such that when it is broken it collapses into itself and thus loses the connection to the reinforcing sheath (12).

## Revendications

1. Bras de suspension (2) pour un véhicule automobile, qui présente un élément de liaison (4) côté carrosserie et un élément de liaison (6) côté roue, dans lequel les éléments de liaison sont reliés entre eux par un élément de barre (8) en une barre métallique (10) et une enveloppe de renforcement (12), dans lequel, la barre métallique (10) se compose de matériau ductile et est ancrée pour les éléments de liaison dans l'enveloppe de renforcement (12), et dans lequel l'enveloppe de renforcement (12) se compose d'un matériau cassant, **caractérisé en ce que** l'enveloppe de renforcement (12) présente au niveau d'une position longitudinale entre les éléments de liaison un point destiné à la rupture (20) et que la périphérie de la barre métallique (10) augmente de l'ancrage pour l'un élément de liaison au point destiné à la rupture (20) et diminue du point destiné à la rupture (20) à l'autre élément de liaison.

2. Bras de suspension (2) selon la revendication 1, **caractérisé en ce que** l'enveloppe de renforcement (12) se compose de matière plastique renforcée de fibres.

3. Bras de suspension (2) selon la revendication 1, **caractérisé en ce que** l'enveloppe de renforcement (12) se compose de matière plastique renforcée de fibres de carbone (CFK).

4. Bras de suspension (2) selon l'une quelconque des revendications 1 à 3, **caractérisé en ce que** la force est réglée pour l'étirement de la barre métallique (10) par rapport à l'enveloppe de renforcement (12) par l'appariement de friction des matériaux de la barre métallique (10) et de l'enveloppe de renforcement (12).

5. Bras de suspension (2) selon la revendication 4, **caractérisé en ce que** la force peut être réglée entre une grande force qui est suscitée par des surfaces brutes au niveau de la barre métallique (10) et/ou de l'enveloppe de renforcement (12), et une force moindre qui est suscitée par des surfaces polies au niveau de la barre métallique (10) et/ou de l'enveloppe de renforcement (12), et une force minimale qui est suscitée par application d'huile sur les surfaces au niveau de la barre métallique (10) et/ou de l'enveloppe de renforcement (12).

6. Bras de suspension (2) selon la revendication 1, **caractérisé en ce que** les ancrages de la barre métallique (10) sont formés par des épaississements formés (14, 16) de la barre métallique (10).

7. Bras de suspension (2) selon la revendication 1, **caractérisé en ce que** la barre métallique (10) est réalisée en tant que corps creux qui est dimensionné de sorte à coïncider lors de la sollicitation de rupture en soi et ainsi perde la liaison avec l'enveloppe de renforcement (12).
